Europäisches Patentamt

European Patent Office

Office européen des brevets

(11) Veröffentlichungsnummer : **0 026 396**
**B1** .

(12) **EUROPÄISCHE PATENTSCHRIFT** .

(45) Veröffentlichungstag der Patentschrift :
13.07.83

(21) Anmeldenummer : 80105562.5

(22) Anmeldetag : 17.09.80

(51) Int. Cl.³ : **B 27 D** 3/04, B 30 B 5/06

(54) Vorrichtung zum Aufbringen einer Flächenpressung auf fortschreitende Werkstücke.

(30) Priorität : 20.09.79 DE 2937971

(43) Veröffentlichungstag der Anmeldung :
08.04.81 Patentblatt 81/14

(45) Bekanntmachung des Hinweises auf die Patenterteilung : 13.07.83 Patentblatt 83/28

(84) Benannte Vertragsstaaten :
FR GB IT NL SE

(56) Entgegenhaltungen :
DE A 1 934 641
DE B 2 722 197

(73) Patentinhaber : Theodor Hymmen KG
Theodor-Hymmen-Strasse 3
D-4800 Bielefeld 1 (DE)

(72) Erfinder : Der Erfinder hat auf seine Nennung
verzichtet

(74) Vertreter : Hoefer, Theodor, Dipl.-Ing.
Kreuzstrasse 32
D-4800 Bielefeld 1 (DE)

## Vorrichtung zum Aufbringen einer Flächenpressung auf fortschreitende Werkstücke

Die Erfindung betrifft eine Vorrichtung zum Aufbringen einer Flächenpressung auf fortschreitende Werkstücke wie Holzwerkstoffplatten od. dgl., bei der mindestens ein umlaufendes Pressband an das Werkstück von einen Druckmittel anpressbar ist, welches in eine an das Pressband angrenzende und mittels einer Dichtung abgedichtete Druckkammer einleitbar ist, wobei die Dichtung von einer verschiebbaren Fassung in der Nut einer Druckplatte geführt und das Pressband an der Dichtung entlanggleitend angeordnet ist.

Bei einer solcher bekannten Vorrichtung (DE-B-27 22 197) ist die Breite der Fassung genauso groß gewählt, wie die Breite der Nut, so daß die Fassung in die Nut hineinpaßt und im drucklosen Zustand dort hineingeschoben und mit Hilfe des in das Innere der Nut eingeleiteten Druckmittels aus der Nut herausgedrückt werden kann. Während das Druckmittels, beispielsweise Druckluft, die Fassung mit der Dichtung in senkrechter Richtung zur Oberfläche des Pressbandes hin drückt, erzeugt die in der Druckkammer befindliche Druckluft bei der Einwirkung auf die Seitenfläche der Dichtung eine zur Oberfläche des Pressbandes parallel gerichtete Kraft. An der Fassung wirkt sich diese Kraft als Moment aus, welches ein Verkanten der Fassung innerhalb der Nut hervorruft, so daß die Fassung darin verkantet und sich nicht mehr mit Hilfe der Druckluft relativ zur Druckplatte verschieben läßt. Die Folge ist, daß bei Abweichungen des Pressbandes aus seiner Ebene während des Pressbetriebes die Dichtung diesen Abweichbewegungen des Pressbandes nicht mehr folgen kann, so daß sich zwischen dem Pressband und der Dichtung Spalte ergeben, durch welche die Druckluft aus der Druckkammer ausströmen kann. Die Dichtung kann also ihre Aufgabe nicht mehr erfüllen.

Der Erfindung liegt die Aufgabe zugrunde, eine Vorrichtung zu schaffen, die während des Betriebes ein ständiges Anliegen der Dichtung an dem daran entlanggleitenden Pressband gewährleistet und bei Abweichungen des Pressbandes aus seiner Bewegungsebene eine ungehinderte Bewegung der Dichtung mit der Fassung senkrecht zur Pressbandebene ermöglicht.

Diese Aufgabe wird erfindungsgemäß dadurch gelöst, daß zwischen der Fassung und der Nut ein Abstand eingehalten ist, welcher von einer mit einer Seite an der Fassung und mit der anderen Seite an einer Wand der Nut fest anliegenden elastischen Dichtung überbrückt ist.

Bevorzugt ist die Fassung an ihrem, dem Pressband zugewandten Ende an mehreren in den Bereich der Nut hineinragenden festen Haltebügeln seitlich abgestützt.

Weitere bevorzugte Ausführungsformen der Erfindung sind in den Schutzansprüchen enthalten. Der Schutzumfang der Erfindung erstreckt sich nicht nur auf die beanspruchten Einzelmerkmale, sondern auch auf deren Kombination.

Ausführungsbeispiele der Erfindung sind in der Zeichnung dargestellt und werden im folgenden näher beschrieben. Es zeigen

Figur 1 die Ansicht einer um eine mittlere Achse drehbaren Druckplatte von der Seite des Pressbandes gesehen;

Figur 2 den Teilschnitt gemäß Linie II-II der Fig. 1 mit einer Ausführung der Fassung für die Pressbanddichtung und der elastischen Dichtung;

Figur 3 den Teilschnitt II-II der Fig. 1 mit einer weiteren Ausführung der Fassung für die Pressbanddichtung und der elastischen Dichtung;

Figur 4 eine Seitenansicht einer Vorrichtung mit einem oberen und einem unteren Pressband.

Die erfindungsgemäße Vorrichtung besteht aus einem unteren Rahmen 10 und einem oberen Rahmen 11, in die jeweils endlose Pressbänder 12 eingebaut sind. Die Pressbänder 12 sind auf Umlenkrollen 13 gespannt und von diesen antreibbar. Sie sind mit einem Spalt zueinander angeordnet, der der Breite eines zu bearbeitenden Werkstückes 14 entspricht. Während die Pressbänder 12 mit ihren das Werkstück 14 berührenden Ob-erflächen eine waagerechte Bewegung ausführen, wird das Werkstück 14 in die Vorrichtung, und zwar in den Spalt, der zwischen den Oberflächen besteht, hineingezogen und dort von den Oberflächen der Pressbänder 12 mit Druck beaufschlagt. Bei Durchlauf des Werkstückes 14 durch die Vorrichtung erfolgt somit seine Bearbeitung, so daß es als fertig bearbeitetes Werkstück den Spalt zwischen den Pressbändern 12 am Austritt aus der Vorrichtung verläßt.

Im vorliegenden Beispiel werden auf die Ober- und Unterseite des Werkstückes 14 Folien 15 aufgepreßt, die von Vorratsrollen 16 ablaufen. Ein solcher Pressvorgang kann bei Raumtemperatur erfolgen, er kann aber auch gleichzeitig das Aufbringen von hohen Temperaturen auf das Werkstück 14 im Bearbeitungsbereich vorsehen. Zur Erzeugung des gewünschten Druckes kann der obere Rahmen 11 insgesamt gegen den unteren Rahmen 10 gepreßt werden oder es kann nach einer Grobeinstellung des Abstandes zwischen dem oberen Rahmen 11 und dem unteren Rahmen 10 der erforderliche Druck mittels des Luftdruckes ausgeübt werden, der in Druckkammern 17 herrscht, die jeweils an der Rückseite des Pressbandes 12 in Bezug auf das Werkstück 14, also an der Oberfläche des Pressbandes 12, welche nicht mit dem Werkstück 14 in Berührung steht, angeordnet sind.

Im vorliegenden Beispiel sind für die Grobeinstellung Führungsschlitten 18 vorgesehen, die an dem untern Rahmen 10 fest angeordnet sind und an denen der obere Rahmen 11 in senkrechter Richtung verschiebbar ist. Für die Verschiebung sorgen Hydraulikzylinder 19. Die Druckkammern 17 sind von Druckplatten 20 begrenzt, die gegenüber den Rahmen 10 und 11 geführt sind und deren Bewegung von Hydraulikzylindern 21 hervorgerufen wird.

Die Druckplatte 20 weist an ihrer dem Pressband 12 zugewandten Oberfläche eine umlaufende Nut 22 zur Befestigung einer Dichtung 23 auf. Im eingebauten Zustand liegt diese Dichtung 23 an dem Pressband 12 an, welches im Betrieb an der Dichtung entlanggleitet. Die Druckkammer 17 wird somit von der Oberfläche der Druckplatte 20, von der von dem Werkstück 14 abgewandten Oberfläche des Pressbandes 12 und von der umlaufenden Dichtung 23 gebildet. Über Öffnungen 24 kann ein Druckmittel durch die Druckplatte 20 hindurch in die Druckkammer 17 eingeleitet werden. Die gesamte Druckplatte 20 ist um eine senkrecht zum Pressband 12 verlaufende mittlere Achse 25 drehbar, so daß bei ihrer rechteckigen Ausbildung mit unterschiedlichen Seitenlängen eine Einstellung der Druckkammerbreite auf verschiedene Werkstückbreiten erfolgen kann.

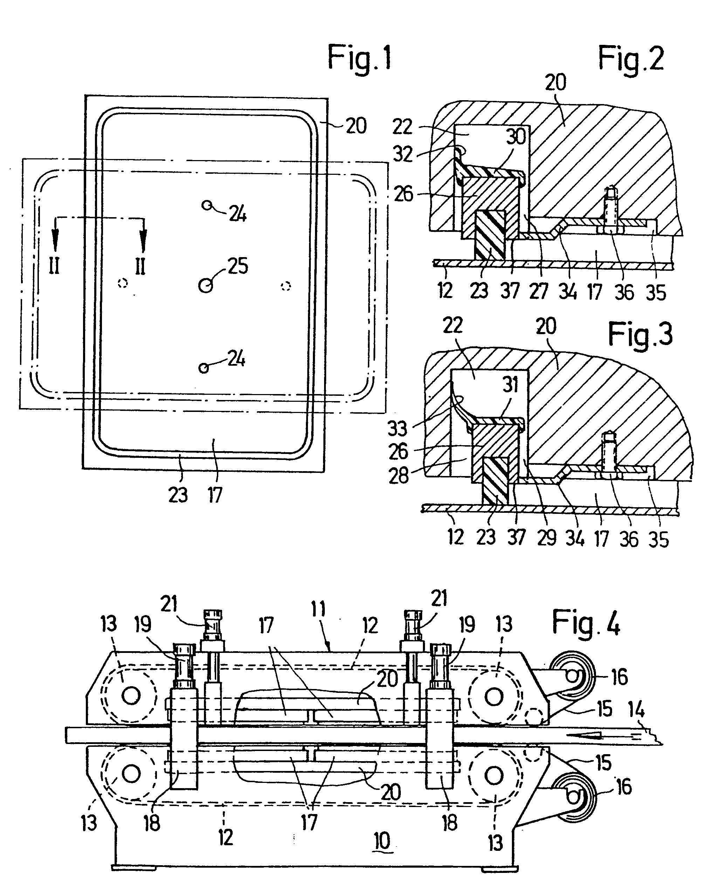

Die Dichtung 23 wird in der Nut 22 von einer Fassung 26 gehalten. Diese weist ebenfalls eine umlaufende und zum Pressband 12 offene Nut auf, in welche die im Querschnitt rechteckige Dichtung 23 eingesteckt ist. Die Fassung 26 ist senkrecht zum Pressband 12 innerhalb der Nut 22 verschiebbar angeordnet, während die Dichtung 23 innerhalb der Fassung 26 festsitzt. Die Breite der Fassung 26 ist kleiner ausgeführt als die Breite der Nut 22, so daß zwischen der Nut 22 und der Fassung 26 ein Abstand 27 bestehen bleibt. Gemäß Fig. 2 der Zeichnung ist der Abstand 27 zu beiden Seiten gleichgroß, während sich gemäß Fig. 3 der Zeichnung zwei verschiedene Abstände 28 und 29 ergeben. An der am weitesten innerhalb der Nut 22 befindlichen zum Pressband 12 parallelen Oberfläche der Fassung 26 ist eine gummielastische Dichtung 30 bzw. 31 angeordnet, die mit einem Rand 32 bzw. 33 an einer Nutwand anliegt und auf diese Weise den Innenraum der Nut 22 gegenüber der Atmosphäre abdichtet. Der Rand 33 gemäß Fig. 3 ist länger ausgeführt, als der Rand 32 gemäß Fig. 2. Diese Dichtung 31 kann daher größere Auslenkungen der Fassung 26 infolge elastischer Verformung ausgleichen. Während der Auslenkungsbewegungen der Fassung 26 bleibt der Rand 32 bzw. 33 an der Wand der Nut 22 haften, eine Gleitreibung tritt an dieser Stelle nicht auf.

An ihrem dem Pressband 12 zugewandten Ende ist die Fassung 26 seitlich von mehreren Haltebügeln 34 abgestützt, die um das Maß des Abstandes 27 bzw. 29 in den Bereich der Nut 22 hineinragen. Jeder Haltebügel ist mit einem Ende innerhalb einer Ausnehmung 35 an der Druckplatte 20 angeschraubt. Zu dieser Befestigung dient ein Schraubenbolzen 36. Zwischen zwei aufeinander folgenden Haltebügeln 34 ist jeweils ein Abstand eingehalten, der es ermöglicht, daß Druckmittel aus der Druckkammer 17 durch den von dem Abstand 27 bzw. 29 bestimmten Raum in das Innere der Nut 22 einströmen kann. Druckmittel, beispielsweise Druckluft, kann durch die Öffnungen 24 in die Druckkammer 17 gelangen und so einen gleichmäßigen statischen Druck in der Druckkammer 17 und in dem von der Fassung 26 nicht eingenommenen Raum der Nut 22 aufbauen. Dieser Druck erzeugt eine Kraft, die die Dichtung 23 senkrecht auf das Pressband 12 drückt. Dieser Kraft wirkt eine kleinere Kraft entgegen, welche von dem Druck des Druckmittels in der Druckkammer 17 und der zum Pressband 12 gewandten Teiloberfläche 37 der Fassung 26 innerhalb der Druckkammer 17 bestimmt wird. Es genügt also, daß der Druck des Druckmittels innerhalb der Druckkammer 17 geringfügig über dem Atmosphärendruck liegt, um ständig eine resultierende Kraft zu erzeugen, die die Dichtung 23 an das Pressband 12 drückt.

Im Betrieb der Vorrichtung wird die Fassung 26 mit der Dichtung 23 aufgrund des Überdruckes in der Druckkammer 17 und der Nut 22 ständig in Richtung zum Pressband 12 hin gedrückt, welches an der Dichtung 23 entlanggleitet. Auslenkungen aus der Pressbandebene kann die Dichtung 23 und mit ihr die Fassung 26 leicht folgen, weil die Reibung zwischen der Fassung 26 und der Druckplatte 20 sehr gering ist. Zwischen der Oberfläche der Fassung 26 und den Wänden der Nut 22 tritt überhaupt keine Reibung auf. Die einzige Stelle, an der eine geringfügige Reibung auftreten kann, ist jeweils die Berührungsstelle zwischen dem Haltebügel und der Fassung 26. Die Fassung kann sich auch geringfügig um diesen Berührungspunkt verschwenken, so daß ein Verkanten in der Nut 22 völlig ausgeschlossen ist.

## Ansprüche

1. Vorrichtung zum Aufbringen einer Flächenpressung auf fortschreitende Werkstücke wie Holzwerkstoffplatten od. dgl., bei der mindestens ein umlaufendes Pressband (12) an das Werkstück von einem Druckmittel anpressbar ist, welches in eine an das Pressband (12) angrenzende und mittels einer Dichtung (23) abgedichtete Druckkammer (17) einleitbar ist, wobei die Dichtung (23) von einer verschiebbaren Fassung (26) in der Nut (22) einer Druckplatte (20) geführt und das Pressband (12) an der Dichtung (23) entlanggleitend angeordnet ist, dadurch gekennzeichnet, daß zwischen der Fassung (26) und der Nut (22) ein seitlicher Abstand (28) eingehalten ist, welcher von einer mit einer Seite an der Fassung (26) und mit der anderen Seite an einer seitlichen Wand der Nut (22) fest anliegenden elastischen Dichtung (30 bzw. 31) überbrückt ist.

2. Vorrichtung nach Anspruch 1, dadurch gekennzeichnet, daß die Fassung (26) an ihrem dem Pressband (12) zugewandten Ende an mehreren in den Bereich der Nut (22) hineinragenden festen Haltebügeln (34) seitlich abgestützt ist.

3. Vorrichtung nach den Ansprüchen 1 und 2, dadurch gekennzeichnet, daß die Haltebügel (34) innerhalb der Druckkammer (17) an der Druckplatte (20) befestigt sind.

4. Vorrichtung nach den Ansprüchen 1 bis 3, dadurch gekennzeichnet, daß jeder Haltebügel (34) mit einem innerhalb einer Ausnehmung (35) der Druckplatte (20) in diese eingeschraubten Schraubenbolzen (36) befestigt ist.

5. Vorrichtung nach den Ansprüchen 1 bis 4, dadurch gekennzeichnet, daß zwischen zwei aufeinander folgenden Haltebügeln (34) jeweils eine Durchtrittsöffnung zum Innenraum der Nut (22) für das Druckmittel freigelassen ist.

6. Vorrichtung nach den Ansprüchen 1 bis 5, dadurch gekennzeichnet, daß die elastische Dichtung (30 bzw. 31) innerhalb der Nut (22) an der von dem Pressband (12) abgewandten Stirnseite der Fassung (26) anliegt.

7. Vorrichtung nach den Ansprüchen 1 bis 6, dadurch gekennzeichnet, daß die elastische Dichtung (30 bzw. 31) innerhalb der Nut (22) an deren von der Druckkammer (17) am weitesten entfernten Wand anliegt.

## Claims

1. Device for exerting a surface pressure on advancing workpieces such as chipboard panels or the like comprising at least one rotating pressure application belt (12) pressable on said workpieces by pressurizing medium induceable in a pressure chamber (17) adjacent to said pressure application belt (12) and sealed by a sealing member (23) guided by a sliding frame member (26) in the groove (22) of a pressure plate (20) and said pressure application belt (12) sliding at said sealing member (23), wherein between said frame member (26) and said groove (22) a side spacing (28) is maintained and a resilient sealing member (30, 31) spanning said spacing (28) with one side at the frame member (26) and with other side at a side wall portion of said groove (22).

2. Device as recited in claim 1, wherein a plurality of retaining yokes (34) projecting into the region of said groove (22) with an end portion facing said pressure application belt support said frame member (26).

3. Device as recited in claims 1 or 2, wherein said retaining yokes (34) are connected to said pressure plate (20) within said pressure chamber (17).

4. Device as recited in claims 1 to 3, wherein each said retaining yoke (34) is connected to said pressure plate (20) effected by bolt means (36) within a recess (35) of said pressure chamber (26).

5. Device as recited in claims 1 to 4, wherein each two successive said retaining yokes (34) define a passage aperture there between, said aperture opening into the interior of the groove (22) and acting as a conduit for the pressurizing medium.

6. Device as recited in claims 1 to 5, wherein said resilient sealing member (30, 31) abuts against said end face of said frame member (26) remoting from said pressure application belt (12).

7. Device as recited in claims 1 to 6, wherein said resilient sealing member (30, 31) abuts against said wall member remoting from said pressure chamber (17).

## Revendications

1. Dispositif pour exercer une pression sur la surface de pièces à travailler en mouvement telles que des panneaux de matériaux ligneux etc., dans lequel au moins une bande de pression tournante (12) peut être poussée sur la pièce par un agent de pression qui peut être introduit dans une chambre de pression (17) adjacente à la bande de pression (12) et rendue étanche au moyen d'un joint (23), le joint (23) étant guidé par une monture coulissante (26) dans la rainure (22) d'une plaque de pression (20) et la bande de pression (12) étant disposée de manière à glisser le long du joint (23), caractérisé par le fait qu'entre la monture (26) et la rainure (22) est maintenu un espacement latéral (28) qui est franchi par un joint élastique (30, 31) s'appliquant fermement par un côté à la monture (26) et par l'autre côté, à une paroi latérale de la rainure (22).

2. Dispositif selon la revendication 1, caractérisé par le fait que la monture (26) est soutenue latéralement, à son extrémité tournée vers la bande de pression (12), par plusieurs étriers de retenue fixes (34) s'avançant dans la région de la rainure (22).

3. Dispositif selon les revendications 1 et 2, caractérisé par le fait que les étriers de retenue (34) sont fixés à la plaque de pression (20) à l'intérieur de la chambre de pression (17).

4. Dispositif selon les revendications 1 à 3, caractérisé par le fait que chaque étrier de retenue (34) est fixé par un boulon fileté (36) vissé dans la plaque de pression (20) à l'intérieur d'un évidement (35) de celle-ci.

5. Dispositif selon l'une quelconque des revendications 1 à 4, caractérisé par le fait qu'entre deux étriers de retenue successifs (34) est chaque fois ménagée une ouverture de passage menant à l'intérieur de la rainure (22) et destinée à l'agent de pression.

6. Dispositif selon l'une quelconque des revendications 1 à 5, caractérisé par le fait que le joint élastique (30, 31) s'applique, à l'intérieur de la rainure (22), contre le côté frontal de la monture (26) qui est opposé à la bande de pression.

7. Dispositif selon l'une quelconque des revendications 1 à 6, caractérisé par le fait que le joint élastique (30, 31) s'applique, à l'intérieur de la rainure (22), contre la paroi de celle-ci qui est la plus éloignée de la chambre de pression (17).

Fig.1

Fig.2

Fig.3

Fig. 4